# EUROPÄISCHE PATENTSCHRIFT

(11) **EP 3 721 104 B1**
(45) Veröffentlichungstag und Bekanntmachung des Hinweises auf die Patenterteilung: **08.02.2023**
(21) Anmeldenummer: 18826969.0
(22) Anmeldetag: 04.12.2018
(51) Int. Cl.: F16C 19/28, F16C 19/36, F16C 19/38, F16C 33/64, F16C 19/54, F16C 33/52, F16C 33/48, F03D 80/70

(54) **WÄLZLAGERANORDNUNG**
ROLLING BEARING ASSEMBLY
AGENCEMENT DE PALIERS A ROULEMENT

(30) Priorität: 06.12.2017 DE 102017128951
(43) Veröffentlichungstag der Anmeldung: 14.10.2020
(73) Patentinhaber: thyssenkrupp rothe erde Germany GmbH, 44137 Dortmund (DE); thyssenkrupp AG, 45143 Essen (DE)
(72) Erfinder: FRONING, Stephan, 58239 Schwerte (DE); BOCHERT, Jan-Peter, 59609 Anröchte (DE)
(74) Vertreter: thyssenkrupp Intellectual Property GmbH
(86) Internationale Anmeldenummer: PCT/EP2018/083439
(87) Internationale Veröffentlichungsnummer: WO 2019/110562

(56) Entgegenhaltungen:
- EP-A1- 2 666 875
- EP-A2- 2 786 018
- DE-A1-102008 046 624
- DE-A1-102012 010 178
- DE-A1-102014 205 816
- DE-A1-102015 200 644
- GB-A- 2 448 712
- US-A1- 2012 141 270
- US-A1- 2017 023 063

## Beschreibung

### Stand der Technik

Die vorliegende Erfindung betrifft eine Lageranordnung für eine Rotorwelle einer Windkraftanlage, bei der die Rotorwelle eine Drehung einer mit Rotorblättern versehenen Nabe an einen Generator überträgt, wobei die Lageranordnung ein nabenseitiges Wälzlager und ein generatorseitiges Wälzlager umfasst.

Die Rotorwelle einer Windkraftanlage überträgt während des Betriebs die Drehung der Rotorblätter an den Generator, wo die von der strömenden Luft angetriebene Drehung des Rotors in elektrische Energie umgewandelt wird. Die Rotorwelle kann dabei auf unterschiedliche Weise in der Gondel der Windkraftanlage gelagert sein. Nach einem ersten Lagerungskonzept sind zwei in Axialrichtung der Rotorwelle voneinander beabstandete Lagerstellen vorgesehen, wobei an einer Lagerstelle ein Loslager und an der anderen Lagerstelle ein Festlager vorgesehen ist (Fest-/Loslagerung). Nach einem zweiten Lagerungskonzept ist die Nabe mit dem Hohlrad eines Planetengetriebes oder im Fall von getriebelosen Anlagen direkt mit dem Rotor des Generators verschraubt. In beiden Fällen des zweiten Lagerungskonzepts wird zur Lagerung der Rotorwelle nur ein einziges Momentenlager benötigt, das bei geringer Bauhöhe Axialkräfte, Radialkräfte und Kippmomente aufnimmt und in die Gondel der Windkraftanlage einleitet. Die vorliegende Erfindung befasst sich mit dem vorstehend beschriebenen ersten Lagerungskonzept, bei dem zwei in Axialrichtung der Rotorwelle voneinander beabstandete Wälzlager vorgesehen sind, von denen eines als Loslager und das andere als Festlager ausgebildet ist.

Die Rotorwelle ist bei den aus dem Stand der Technik bekannten Fest-/Loslagerungen im Wesentlichen horizontal angeordnet und an zwei axial beabstandeten Stützstellen drehbar gelagert. Die beiden zughörigen Lager werden im Folgenden je nach ihrer Position als nabenseitiges und generatorseitiges Lager bezeichnet. Die drehbare Lagerung der Welle muss dabei zum einen das Eigengewicht der Welle selbst und das der Nabe und Rotorblätter tragen, zum anderen außerdem die durch den Wind verursachten Lasten aufnehmen. Beide Belastungen erzeugen in den Lagern Kippmomente und Kräfte in radialer und axialer Richtung, wobei das nabenseitige Lager dabei aufgrund des großen Gewichts der Rotorblätter deutlich größere Belastungen tragen muss. Darüber hinaus führen die Kräfte zu elastischen Verformungen der Rotorwelle. Die Wälzlager können dabei so ausgestaltet sein, dass diese elastischen Verformungen der Rotorwelle durch die Lager ausgeglichen werden.

Technische Realisierungen solcher Lagerungen der Rotorwelle sind aus dem Stand der Technik bekannt. DE 10 2012 010 178 A1 zeigt ein Generatorgetriebe mit einer mittels einer Festlagerung und einer Loslagerung in einer Lageraufnahmestruktur gelagerten Abtriebswelle. Dabei wird ein bei Lastsprüngen verbessertes Anschmierverhalten dadurch erreicht, dass die Loslagerung zwei nebeneinander liegende Zylinderrollenlager aufweist. Gegenüber einem Einzellager können die einzelnen Komponenten der beiden Lager kleiner und leichter dimensioniert werden und können daher schneller beschleunigt werden. Die Festlagerung besteht aus zwei Kegelrollenlagern.

In der Druckschrift EP 2 871 376 B1 wird dazu eine Lagerung für eine Strömungsmaschine, beispielsweise eine Windkraftanlage beschrieben, bei der die Welle mittels eines Fest- und eines Loslagers drehbar gelagert ist. Das Festlager besteht dabei aus zwei selbstausrichtenden Kontaktlagern, bei denen jeweils mehrere tonnenförmige Wälzkörper mit einer Neigung gegenüber der Drehachse angeordnet sind und zwischen zwei gekrümmten Laufflächen abrollen. In einem axialen Abstand zum Festlager ist das Loslager angeordnet, bei dem ein weiterer Satz Rollenelemente zwischen zwei gekrümmten Laufflächen abrollt. Durch die selbstausrichtenden Toroidalrollenlager wird eine Lageranordnung erzeugt, die Durchbiegungen und Fluchtungsfehler der Welle in einem hohen Maße toleriert. Ein Nachteil dieser Anordnung besteht allerdings umgekehrt darin, dass eine solche nachgiebige Lagerungen lastbedingten Verformungen der Welle nur geringen Widerstand entgegensetzt. Die Verformungen der Welle müssen daher vom Generator aufgenommen werden. Weiterhin führt der Einsatz eines Toroidalrollenlagers als Loslager dazu, dass axiale Bewegungen der Welle, z.B. aufgrund von Wärmeausdehnung nur begrenzt aufgenommen werden können. Ein weiterer Nachteil besteht darin, dass bei Toroidalrollenlagern die Krümmungsradien der balligen Wälzkörper kleiner sind als die Krümmungsradien der Laufbahnen und solche Lager daher eine erhöhte Schlupfanfälligkeit aufweisen, die insbesondere bei großen Lasten zu starkem Verschleiß führt.

Aus US 2012/0141270 A1 ist ein Antriebsstrang und ein Verfahren zum Schmieren eines Lagers im Antriebsstrang einer Windenergieanlage bekannt. Die Antriebswelle erstreckt sich dabei durch mehrere Lagergehäuse, welche mit der Antriebswelle in Verbindung stehende Lager enthalten. Das vordere Gehäuse enthält ein Festlager, während das hintere Gehäuse ein Loslager enthält.

WO 2013/080399 A2 zeigt eine Vorrichtung zur Stromerzeugung aus erneuerbarer Energie und eine Verfahren zur Befestigung einer hydraulischen Pumpe daran.

EP 2 666 875 A1 beschreibt eine Lagerung der Hauptwelle einer Windenergieanlage mittels zweier als Doppelkegelrollenlager ausgebildeter Hauptwellenlager, die hintereinander in Axialrichtung der Hauptwelle angeordnet sind. In den Lagerringen der Hauptwellenlager sind abschreckgehärtete Schichten durch Induktionshärten homogen entlang der Laufbahnen über den gesamten Umfang ausgebildet.

EP 2 786 018 offenbart eine gattungsgemäße Lageranordnung für eine drehbare Lagerung einer Rotorwelle.

### Offenbarung der Erfindung

Der vorliegenden Erfindung liegt die Aufgabe zugrunde, die ungleichförmige Lastverteilung auf das nabenseitige und das generatorseitige Lager durch eine passende Ausgestaltung der Lager aufzufangen und die axiale Dehnung der Welle gering zu halten. Eine technische Randbedingung besteht darin, das Lager für einen Einsatzzeitraum von mehr als 20 Jahren betriebssicher auszulegen und zu diesem Zweck die Pressungen der Kontakte zwischen Wälzkörpern und Laufbahnen gering zu halten (insbesondere kleiner als 1500 MPa für Betriebslasten). Eine wirtschaftliche und logistische Randbedingung besteht darin, die Größe und das Gewicht der Lager zu begrenzen.

Gelöst wird diese Aufgabe durch eine Lageranordnung für eine Rotorwelle einer Windkraftanlage, bei der die Rotorwelle eine Drehung einer mit Rotorblättern versehenen Nabe an einen Generator überträgt, wobei die Lageranordnung ein nabenseitiges Wälzlager und ein generatorseitiges Wälzlager umfasst, wobei das nabenseitige Wälzlager als mehrreihiges Radialrollenlager ausgebildet ist und das generatorseitige Wälzlager als Kegelrollenlager ausgebildet ist.

Es hat sich überraschenderweise herausgestellt, dass die erfindungsgemäße Kombination dieser beiden Lagerformen eine optimale Anpassung an die jeweilige spezifische Belastungssituation auf der Nabenseite und der Generatorseite ermöglicht. Das nabenseitige Wälzlager trägt vorrangig die Gewichtskräfte der Nabe und der Rotorblätter und ist dadurch starken Radialkräften ausgesetzt. Um diese Kräfte aufzunehmen und dabei gleichzeitig die Pressung der Kontakte zwischen Wälzkörpern und Laufbahnen gering zu halten, ist eine große Wälzkörperlänge vorteilhaft. Dadurch verteilen sich die zu übertragenden Radialkräfte auf eine entsprechend große Kontaktzone, woraus sich eine geringere Flächenpressung ergibt. Das generatorseitige Wälzlager muss dagegen gegenüber dem nabenseitigen Lager geringere Radialkräfte aufnehmen, dafür jedoch eine gewisse Toleranz gegenüber Verformungen der Welle aufweisen, die durch die großen Kräfte entstehen, die an der Nabe angreifen. Durch den Überhang der Nabe gegenüber der nabenseitigen Stützstelle erzeugen die Gewichtskräfte von Nabe und Rotorblättern und auch die Windkräfte ein Kippmoment, das von den Lagern aufgenommen werden muss und zusätzlich zu den genannten elastischen Verformungen führt.

Bei der erfindungsgemäßen Lageranordnung wird durch das Zusammenspiel von naben- und generatorseitigem Lager eine Toleranz gegenüber bestimmten Bewegungen der Welle erzeugt, während andere Bewegungen effektiv unterdrückt werden. So ist das nabenseitige Radiallager fähig, axiale Bewegungen der Welle zuzulassen, während z.B. durch Biegemomente hervorgerufene radiale Verschiebungen vom Radiallager unterbunden werden und die entsprechenden Belastungen über die Lager in die Anschlusskonstruktion eingeleitet werden. Das generatorseitige Kegelrollenlager wiederum kann dagegen Winkelbewegungen aufgrund der sich durchbiegenden Welle in einem gewissen Umfang ausgleichen, verhindert aber eine axiale Verschiebung der Welle, so dass die Welle auf diese Weise am generatorseitigen Ende in axialer Richtung fixiert wird. Damit das naben- und das generatorseitige Lager in solcher Weise vorteilhaft zusammenwirken können, ist es notwendig, dass die Aufnahmefähigkeiten beider Lager für die Bewegungen der Welle aufeinander abgestimmt sind. Mit der oben zitierten Druckschrift EP 2 871 376 B1 als Ausgangspunkt würde beispielsweise eine bloße Ersetzung des Loslagers durch ein Zylinderrollenlager eher zu einer Verschlechterung des Zusammenspiels zwischen Los- und Festlager führen, da die hohe Flexibilität des Festlagers Bewegungen der Welle erlaubt, die beim Loslager zu Schiefstellungen führen, die von einem Zylinderrollenlager nicht aufgenommen werden können und zu hohen Pressungen oder sogar sogenannten "Kantenläufern" führen können. Dies führt zu unakzeptabel hohem Verschleiß. Daher ist es ausdrücklich das erfindungsgemäße Zusammenwirken der beiden Lager, das den gewünschten technischen Effekt (Tolerierung gewisser Bewegungen der Rotorwelle bei gleichzeitiger Sicherstellung einer für Rotorlager von Windkraftanlagen geforderten Lebensdauererwartung von mindestens 20 Jahren) erzielt.

Um die Anordnung der Wälzkörper und die sich daraus ergebenden radialen und axialen Belastungsverhältnisse zu beschreiben, ist es zweckmäßig, die Druckwinkel der Wälzlager zu betrachten. Jeder Wälzkörper steht mit den Laufbahnen beider Lagerringe an mindestens zwei gegenüberliegenden Punkten in Kontakt. Durch diese beiden Punkte wird eine Drucklinie festgelegt, also die Linie, entlang derer der Wälzkörper Druckkräfte zwischen den beiden Ringen überträgt. Der Winkel, den die Drucklinie mit der Radialebene des Lagers einschließt, wird als Druckwinkel bezeichnet und liegt für ein reines Radiallager in der Nähe von 0° und für ein reines Axiallager in der Nähe von 90°. Für das erfindungsgemäße nabenseitige Wälzlager ist die Übertragung von radialen Kräften entscheidend, so dass die Druckwinkel bei diesem Lager möglichst klein, mindestens aber kleiner als 45° gewählt sind. Das generatorseitige Lager muss dagegen auch stärkere Axialkräfte aufnehmen, was erfindungsgemäß durch ein Kegelrollenlager erreicht wird. Die Ausführungsformen des nabenseitigen und des generatorseitigen Lagers, die im Folgenden beschrieben werden, lassen sich jeweils miteinander kombinieren.

Gemäß einer bevorzugten Ausführungsform der vorliegenden Erfindung ist das generatorseitige Wälzlager als doppelreihiges Kegelrollenlager in X-Anordnung ausgebildet. Die Kegelrollen sind dabei in zwei in Axialrichtung nebeneinanderliegenden Reihen angeordnet, wobei die Kegelrollen beider Reihen gegenüber der Drehachse des Lagers geneigt sind. Die relative Neigung der beiden Reihen zueinander lässt sich über die zugehörigen Drucklinien charakterisieren. Stellt man sich die Drucklinien radial nach außen über die Kontaktpunkte der Wälzkörper hinaus verlängert vor, so können die Drucklinien der beiden Reihen entweder auseinanderlaufen (X-Anordnung) oder sich in einem Schnittpunkt kreuzen (O-Anordnung). Die erfindungsgemäß bevorzugte X-Anordnung weist gegenüber der O-Anordnung eine geringere Steifigkeit auf, wodurch vorteilhafterweise gewisse Verformungen der Welle besser toleriert werden. Dadurch, dass die Drucklinien schräg zur Radialebene verlaufen ist die Wälzlageranordnung darüber hinaus gut geeignet, zusätzlich zu den Radialkräften auch axiale Kräfte aufzunehmen und in die Anschlusskonstruktion zu übertragen. Auf diese Weise setzt das Kegelrollenlager in X-Anordnung einen Widerstand gegen kräfte- und/oder momenteninduzierte Durchbiegungen der Rotorwelle entgegen und leitet diese Kräfte und Momente in die Anschlusskonstruktion der Gondel ab. Dadurch werden unerwünschte Schiefstellungen der Rotorwelle im Bereich des Generators vermieden.

Gemäß einer weiteren bevorzugten Ausführungsform der Erfindung ist das generatorseitige Wälzlager als doppelreihiges Kegelrollenlager in O-Anordnung ausgebildet. Ähnlich wie bei der X-Anordnung sind die Kegelrollen in zwei nebeneinanderliegenden Reihen angeordnet, wobei die radial nach außen verlängerten Drucklinien sich in einem Schnittpunkt kreuzen. Die O-Anordnung weist gegenüber der X-Anordnung eine höhere Steifigkeit auf, wodurch die Lageranordnung besser geeignet ist, Kippmomente aufzunehmen. Auch weist die Lageranordnung mit einem Kegelrollenlager in O-Anordnung eine geringere Toleranz gegenüber elastischen Verformungen der Rotorwelle auf als eine Lageranordnung mit einem Kegelrollenlager in X-Anordnung.

Gemäß einer bevorzugten Ausführungsform der Erfindung weist das generatorseitige Wälzlager einen einteiligen Innenring und einen mehrteiligen Außenring auf. Die inneren Laufflächen für die beiden Wälzkörperreihen sind dabei beide am einteiligen Innenring angeordnet, während die beiden äußeren Laufflächen an verschiedenen Teilen des mehrteiligen Außenrings angeordnet sind. Dadurch wird vorteilhafterweise eine einfachere Montage ermöglicht, bei der die Wälzkörper beider Reihen zuerst am Innenring angeordnet werden und der mehrteilige Außenring danach so zusammengefügt wird, dass die Wälzkörper zwischen Außen- und Innenring eingefasst werden. Besonders bevorzugt besteht der Außenring aus drei Teilen, wobei zwei Teile die beiden äußeren Laufbahnen aufweisen und dazwischen ein mittlerer, dritter Teil angeordnet ist. Da nur die beiden äußeren Teile des Außenrings Laufbahnen aufweisen, können sie beispielsweise gezielt aus einem gehärteten Material hergestellt werden, während beim mittleren Teil auf eine solche Härtung vorteilhafterweise verzichtet werden kann.

Gemäß einer weiteren bevorzugten Ausführungsform der Erfindung ist das nabenseitige Wälzlager als Zylinderrollenlager ausgebildet. Diese Lagerform ist vorteilhafterweise besonders geeignet, die hohen radialen Lasten zu tragen und darüber hinaus fähig, axiale Verschiebungen, z.B. in Form einer durch Temperaturänderung verursachten Ausdehnung der Welle aufzunehmen. Des Weiteren weisen zylinderförmige Wälzkörper insbesondere gegenüber balligen Wälzkörperformen eine geringere Schlupfanfälligkeit auf, was besonders bei hohen Lasten den dadurch verursachten Verschleiß vermindert.

Gemäß der Erfindung ist das nabenseitige Wälzlager als mehrreihiges Radialrollenlager ausgebildet. Die Rollen der verschiedenen Reihen weisen dabei Drucklinien auf, die im Wesentlichen in der Radialebene liegen, so dass Radialkräfte in optimaler Weise übertragen werden. Um starke Pressungen zwischen den Wälzkörpern und den Laufbahnen zu vermeiden, ist es erforderlich, dass sich zwischen ihnen möglichst große Kontaktflächen ausbilden. Anstatt solche Kontaktflächen durch entsprechend lange Wälzkörper zu realisieren, werden bei der erfindungsgemäßen Ausführungsform mehrreihige Lager eingesetzt. Diese weisen ebenfalls eine, über mehrere Reihen verteilte, große Gesamtkontaktfläche auf, besitzen aber darüber hinaus den Vorteil, dass die effektive Schiefstellung der Wälzkörper geringer ausfällt. Dadurch ist es vorteilhaft möglich, die mit Schiefstellungen verbundenen erhöhten lokalen Kontaktpressungen zu vermeiden, so dass der Materialverschleiß reduziert und die Lebensdauer erhöht wird. Gemäß einer besonders bevorzugten Ausführungsform ist das nabenseitige Wälzlager insbesondere als doppelreihiges Rollenlager ausgebildet.

Gemäß einer bevorzugten Ausführungsform werden die Wälzkörper mit Hilfe eines geschlossenen Käfigs geführt. Die nachfolgenden Beschreibungen dieser Käfigführungen stellen gleichermaßen mögliche Ausführungsformen des nabenseitigen Wälzlagers und des generatorseitigen Wälzlagers dar.

Gemäß einer bevorzugten Ausführungsform werden die Wälzkörper in Fenstern des geschlossenen Käfigs geführt. Durch die Führung werden gleichmäßige Abstände zwischen benachbarten Wälzkörpern gewährleistet, so dass auf diese Weise insbesondere verhindert wird, dass sich benachbarte Wälzkörper berühren. Darüber hinaus wird dadurch vorteilhafterweise eine gleichförmige Verteilung der Belastung erreicht. Wälzkörper, die beim Umlauf zeitweise keiner Belastung unterliegen werden in den Käfigfenstern mitgeführt, ohne dass es zu Gleitbewegungen oder Schiefstellungen kommt.

Gemäß einer weiteren bevorzugten Ausführungsform werden die Wälzkörper in einem Bolzenkäfig geführt. Dazu weisen die Wälzkörper Bohrungen auf, in die seitlich am Käfig befestigte Bolzen gefügt sind, so dass die Lage und Ausrichtung der Wälzkörper in kontrollierter Weise mit engem Spiel geführt wird. Dadurch lassen sich vorteilhafterweise die Wälzkörper dicht aufeinanderfolgend anordnen, ohne dass die Gefahr besteht, dass sie sich beim Umlauf gegenseitig berühren oder blockieren.

Bei den mehrreihigen Ausführungsformen ist es erfindungsgemäß bevorzugt möglich, dass die Wälzkörper benachbarter Reihen durch einen Mittelsteg des Käfigs getrennt sind. Dadurch wird vorteilhafterweise verhindert, dass sich die Wälzkörper an ihren Stirnflächen berühren oder durch Schiefstellungen gegenseitig blockieren.

Gemäß der Erfindung weisen die generatorseitigen Wälzlager und die nabenseitigen Wälzlager induktiv gehärtete Laufbahnen auf. Da sowohl das nabenseitige als auch das generatorseitige Lager großen Lasten ausgesetzt sind, kommt es beim Abrollen der Wälzkörper zu zyklischen elastischen Verformungen der Wälzkörper und Laufbahnen. Um zu verhindern, dass über diese elastischen Prozesse hinaus plastische Verformungsarbeit geleistet wird, die auf Dauer zur Ermüdung und schließlich zu Schäden des Materials führt, werden die Laufbahnen mit einem induktiven Verfahren gehärtet. Dabei wird zum einen die plastische Verformbarkeit der Laufbahnen stark herabgesetzt und zum anderen Abrieb vermindert, der das Material verschleißen lässt. Induktive Härtungsverfahren haben dabei den Vorteil, dass die Wärme direkt im Material entsteht und nicht erst durch Wärmeleitung ausgehend von der Oberfläche in das Material eindringen muss. Des Weiteren lässt sich auf diesem Weg eine starke Erwärmung in sehr kurzer Zeit durchführen.

Gemäß einer weiteren bevorzugten Ausführungsform weist das generatorseitige Wälzlager integrierte Lagerspaltdichtungen auf. Dadurch ist es vorteilhafterweise möglich, dass zum einen ein Austritt von Schmiermittel aus dem Lager vermindert wird und zum anderen durch die Dichtung verhindert wird, dass von außen Verschmutzungen und Fremdkörper in das Lager gelangen und dort zu Schäden führen.

Gemäß einer weiteren bevorzugten Ausführungsform umfasst die Lageranordnung zusätzlich mindestens ein nabenseitiges hydrostatisches Element und insbesondere ein Gleitlager. Die aufgeführten Ausführungsformen der erfindungsgemäßen Lageranordnung lassen sich mit hydrostatischen Elementen kombinieren, die das nabenseitige Lager zusätzlich unterstützen und eine Reduzierung der nabenseitigen Radialkräfte bewirken. Eine solche Reduzierung kann zum Beispiel von einem hydrostatischen Gleitlager geleistet werden. Bei diesem Lagertyp sind die beiden drehbar zueinander gelagerten Ringe durch einen Flüssigkeitsfilm getrennt, so dass die Ringe bei der Drehung mit geringer Reibung gegeneinander gleiten. Im Gegensatz zu hydrodynamischen Lagern oder geschmierten Wälzlagern ist der, die Lagerringe trennende Flüssigkeitsfilm permanent vorhanden und kann auch bei geringen Drehzahlen oder bei Stillstand Kräfte zwischen den Lagerringen übertragen, so dass der Verschleiß des Wälzlagers reduziert und die Lebensdauer der Lageranordnung erhöht wird.

Gemäß einer bevorzugten Ausführungsform der Erfindung ist das nabenseitige Wälzlager als Loslager und das generatorseitige Wälzlager als Festlager ausgebildet.

### Kurze Beschreibung der Zeichnungen

- **Figur 1**: zeigt schematisch eine Lageranordnung für die Rotorwelle einer Windkraftanlage gemäß einer beispielhaften Ausführungsform der vorliegenden Erfindung.
- **Figur 2**: zeigt schematisch ein nabenseitiges Wälzlager und ein generatorsei-tiges Wälzlager gemäß einer beispielhaften Ausführungsform der vorliegenden Erfindung.

### Ausführungsformen der Erfindung

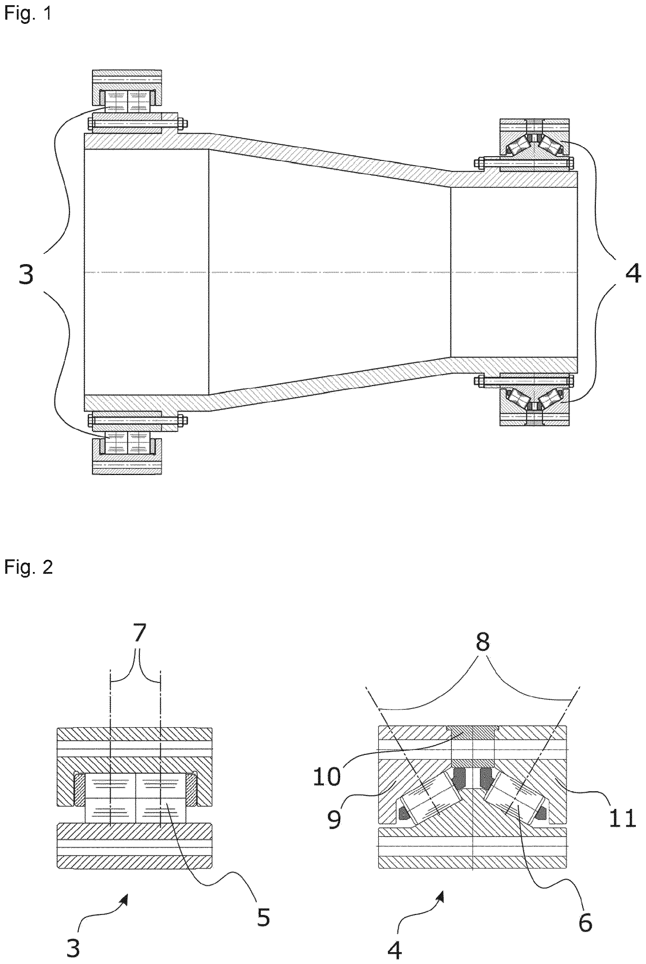

In **Figur 1** ist schematisch eine Lageranordnung für die Rotorwelle einer Windkraftanlage gemäß einer möglichen Ausführung der Erfindung in einer radialen Schnittdarstellung abgebildet. In der Windkraftanlage ist die Nabe mit dem Generator über eine Rotorwelle verbunden, wodurch die Rotation der Nabe an den Generator übertragen und dort in elektrische Energie umgewandelt wird. Die Welle ist dabei erfindungsgemäß mittels zweier Wälzlageranordnungen 3 und 4 drehbar gelagert. Entsprechend ihrer Position relativ zu Nabe und Generator werden die beiden Wälzlageranordnungen 3 und 4 als nabenseitiges Lager 3 und als generatorseitiges Lager 4 bezeichnet. Die Nabenseite entspricht in der Zeichnung der linken und die Generatorseite der rechten Seite.

Das nabenseitige Lager 3 wird in dieser Ausführungsform durch zwei Reihen von Zylinderrollen 5 gebildet, die bei der Drehung zwischen den beiden Lagerringen abrollen. Die zylinderförmigen Wälzkörper übertragen dabei die Kräfte zwischen den beiden Lagerringen im Wesentlichen in radialer Richtung und sind somit optimal geeignet, die hohen Radialkräfte aufzunehmen, die vom Gewicht der Nabe und der Rotorblätter erzeugt werden.

Das generatorseitige Wälzlager 4 wird in dieser Ausführungsform durch zwei Reihen von Kegelrollen 6 gebildet. Die Lage der Kegelrollen 6 der beiden Reihen ist dabei zueinander und gegenüber der Drehachse so geneigt, dass sich eine X-Anordnung ergibt. Die X-Anordnung lässt sich über die, durch das Lager bestimmten Drucklinien charakterisieren, wie in der Beschreibung zu Figur 2 näher ausgeführt wird. Diese Lagerform ist optimaler Weise dazu geeignet, sowohl radiale als auch axiale Kräfte aufzunehmen und weist darüber hinaus eine gewisse Toleranz gegenüber Verformungen der Welle auf, die sich besonders stark auf der Generatorseite auswirken und dort entsprechend kompensiert werden müssen.

In **Figur 2** ist schematisch ein nabenseitiges Wälzlager 3 und ein generatorseitiges Wälzlager 4 gemäß einer möglichen Ausführung der Erfindung dargestellt. Beide Wälzlager 3 und 4 sind in einem radialen Schnitt dargestellt, wobei im Vergleich zu Figur 1 nur jeweils die obere der beiden Schnittflächen abgebildet ist und die unteren Schnittflächen symmetrisch zur Drehachse gespiegelt an der gegenüberliegenden Position des jeweiligen Wälzlagers liegen.

Das nabenseitige Lager 3 wird in dieser Ausführungsform durch zwei Reihen von Zylinderrollen 5 gebildet, die bei der Drehung zwischen den beiden Lagerringen abrollen. Dabei bildet jede Rolle 5 mit den beiden Laufbahnen im unbelasteten Zustand an zwei, einander gegenüberliegenden Stellen Linienkontakte aus. Die Belastung wird durch einen Spannungsverlauf im Innern des Wälzkörpers von einem Kontakt zum gegenüberliegenden Kontakt übertragen. Durch die Lage und Form der Wälzkörper 5 ist das dargestellte Lager 3 im Wesentlichen ein reines Radiallager, so dass die Spannungen zwischen den Kontakten im Wesentlichen radial verlaufen und die zughörigen Drucklinien 7 ebenfalls in radiale Richtung zeigen.

Das generatorseitige Wälzlager 4 wird in dieser Ausführungsform durch zwei Reihen von Kegelrollen 6 gebildet. Die Lage der Kegelrollen 6 der beiden Reihen ist dabei zueinander und gegenüber der Drehachse so geneigt, dass sich eine X-Anordnung ergibt. Werden die Drucklinien 8 über die Wälzkörper 6 hinaus verlängert, laufen sie nach außen hin auseinander. Die Drucklinien der (nicht dargestellten) symmetrisch zur Drehachse gegenüberliegenden Wälzkörper laufen entsprechend zur anderen Seite nach außen auseinander, so dass die beiden Drucklinienpaare eine X-Konfiguration bilden. Die Neigung der Drucklinien 8 gegenüber der radialen Richtung bestimmt die Richtung, in der die Wälzkörper 6 Druckspannung übertragen können. Aus den dargestellten Drucklinien 8 des generatorseitigen Lagers 4 ist daher ersichtlich, dass die Wälzkörper 6 sowohl radiale als auch axiale Lasten aufnehmen können, wodurch sie erfindungsgemäß an die Belastungssituation an der generatorseitigen Position angepasst sind. Darüber hinaus bewirkt die geringe Eigensteifigkeit der X-Anordnung, dass das generatorseitige Lager 4 die belastungsbedingten Verformungen der Rotorwelle 1 ausgleichen kann.

In der abgebildeten Ausführungsform besteht der äußere Lagerring aus drei Teilen 9, 10, 11. Die beiden äußeren Teile 9, 11 weisen jeweils eine Laufbahn auf, an der die Kegelrollen 6 abrollen, während der dritte Teil 10 des Lagerrings zwischen den Teilen 9, 11 angeordnet ist. Bei der Montage werden zunächst die Kegelrollen 6 an den Laufbahnen des Innenrings angeordnet und der Außenring in einem zweiten Schritt so aus den Teilen 9, 10, 11 zusammengefügt, dass die Wälzkörper 6 zwischen den beiden Lagerringen eingefasst sind. Die beiden äußeren Teile 9, 11 bestehen dabei aus deinem gehärteten Material, um den Verschleiß beim Abrollen der Wälzkörper 6 möglichst gering zu halten.

### BEZUGSZEICHENLISTE

- 3: nabenseitiges Wälzlager
- 4: generatorseitiges Wälzlager
- 5: Wälzkörper des nabenseitigen Wälzlagers
- 6: Wälzkörper des generatorseitigen Wälzlagers
- 7: Drucklinien des nabenseitigen Wälzlagers
- 8: Drucklinien des generatorseitigen Wälzlagers
- 9: erster Teil des mehrteiligen äußeren Lagerrings
- 10: zweiter Teil des mehrteiligen äußeren Lagerrings
- 11: dritter Teil des mehrteiligen äußeren Lagerrings

## Patentansprüche

1. Lageranordnung für eine drehbare Lagerung einer Rotorwelle einer Windkraftanlage, bei der die Rotorwelle eine Drehung einer mit Rotorblättern versehenen Nabe an einen Generator überträgt, wobei die Lageranordnung ein nabenseitiges Wälzlager (3) und ein generatorseitiges Wälzlager (4) umfasst, wobei das nabenseitige Wälzlager (3) als ein mehrreihiges Radialrollenlager ausgebildet ist und das generatorseitige Wälzlager (4) als ein doppelreihiges Kegelrollenlager in einer X-Anordnung oder einer O-Anordnung ausgebildet ist, **dadurch gekennzeichnet, dass** das generatorseitige Wälzlager (4) und das nabenseitige Wälzlager (3) induktiv gehärtete Laufbahnen aufweisen, wobei die Wälzlager (3, 4) jeweils mit ihrem Innenring endseitig auf die Rotorwelle aufgeschoben und mit den jeweiligen Innenring in axialer Richtung der Wälzlager (3, 4) durchdringenden Schrauben an einem zugeordneten radialen Vorsprung der Rotorwelle verschraubt sind.

2. Lageranordnung nach Anspruch 1, wobei das generatorseitige Wälzlager (4) einen einteiligen Innenring und einen mehrteiligen Außenring aufweist.

3. Lageranordnung nach einem der vorhergehenden Ansprüche, wobei das nabenseitige Wälzlager (3) als Zylinderrollenlager ausgebildet ist.

4. Lageranordnung nach einem der vorhergehenden Ansprüche, wobei das nabenseitige Wälzlager (3) als doppelreihiges Rollenlager ausgebildet ist.

5. Lageranordnung nach einem der vorhergehenden Ansprüche, wobei das nabenseitige Wälzlager (3) einen geschlossenen Käfig zur Führung einer Mehrzahl von Wälzkörpern aufweist.

6. Lageranordnung nach Anspruch 5, wobei die Wälzkörper (5) des nabenseitigen Wälzlagers (3) in Fenstern des Käfigs geführt sind.

7. Lageranordnung nach Anspruch 5, wobei die Wälzkörper (5) des nabenseitigen Wälzlagers (3) in mehreren Reihen angeordnet sind und die Reihen im Käfig durch einen Mittelsteg getrennt sind.

8. Lageranordnung an Anspruch 5, wobei die Wälzkörper (5) des nabenseitigen Wälzlagers (3) in einem Bolzenkäfig geführt sind.

9. Lageranordnung nach einem der vorhergehenden Ansprüche, wobei das generatorseitige Wälzlager (4) einen geschlossenen Käfig zur Führung einer Mehrzahl von Wälzkörpern aufweist.

10. Lageranordnung nach Anspruch 9, wobei die Wälzkörper (6) des generatorseitigen Wälzlagers (4) in Fenstern des Käfigs geführt sind.

11. Lageranordnung nach Anspruch 9, wobei die Wälzkörper (6) des generatorseitigen Wälzlagers (4) in einem Bolzenkäfig geführt sind.

12. Lageranordnung nach einem der vorhergehenden Ansprüche, wobei das generatorseitige Wälzlager (4) integrierte Lagerspaltdichtungen aufweist.

13. Lageranordnung nach einem der vorhergehenden Ansprüche, wobei das nabenseitige Wälzlager (3) als Loslager und das generatorseitige Wälzlager (4) als Festlager ausgebildet ist.

## Claims

1. Bearing arrangement for rotatably supporting a rotor shaft of a wind turbine, wherein the rotor shaft transmits a rotation of a hub provided with rotor blades to a generator, wherein the bearing arrangement comprises a hub-side rolling bearing (3) and a generator-side rolling bearing (4), wherein the hub-side rolling bearing (3) is configured in the form of a multi-row radial roller bearing and the generator-side rolling bearing (4) is configured in the form of a double-row tapered roller bearing in an X-arrangement or an O-arrangement, **characterized in that** the generator-side rolling bearing (4) and the hub-side rolling bearing (3) have induction hardened raceways, wherein the rolling bearings (3, 4) have each been pushed onto an end of the rotor shaft with their inner ring and have been screwed to an associated radial protrusion of the rotor shaft by screws that pass through the respective inner ring in an axial direction of the rolling bearings (3, 4).

2. Bearing arrangement according to Claim 1, wherein the generator-side rolling bearing (4) has a one-part inner ring and a multi-part outer ring.

3. Bearing arrangement according to either of the preceding claims, wherein the hub-side rolling bearing (3) is configured in the form of a cylindrical roller bearing.

4. Bearing arrangement according to one of the preceding claims, wherein the hub-side rolling bearing (3) is configured in the form of a double-row roller bearing.

5. Bearing arrangement according to one of the preceding claims, wherein the hub-side rolling bearing (3) has a closed cage for guiding a plurality of rolling elements.

6. Bearing arrangement according to Claim 5, wherein the rolling elements (5) of the hub-side rolling bearing (3) are guided in windows of the cage.

7. Bearing arrangement according to Claim 5, wherein the rolling elements (5) of the hub-side rolling bearing (3) are arranged in a plurality of rows and the rows in the cage are separated by a central web.

8. Bearing arrangement according to Claim 5, wherein the rolling elements (5) of the hub-side rolling bearing (3) are guided in a pin cage.

9. Bearing arrangement according to one of the preceding claims, wherein the generator-side rolling bearing (4) has a closed cage for guiding a plurality of rolling elements.

10. Bearing arrangement according to Claim 9, wherein the rolling elements (6) of the generator-side rolling bearing (4) are guided in windows of the cage.

11. Bearing arrangement according to Claim 9, wherein the rolling elements (6) of the generator-side rolling bearing (4) are guided in a pin cage.

12. Bearing arrangement according to one of the preceding claims, wherein the generator-side rolling bearing (4) has integrated bearing gap seals.

13. Bearing arrangement according to one of the preceding claims, wherein the hub-side rolling bearing (3) is configured in the form of a floating bearing and the generator-side rolling bearing (4) is configured in the form of a fixed bearing.

## Revendications

1. Ensemble de paliers pour un montage en rotation d'un arbre de rotor d'une éolienne, dans lequel l'arbre de rotor transmet à un générateur une rotation d'un moyeu pourvu de pales de rotor, dans lequel l'ensemble de paliers comprend un palier à roulement côté moyeu (3) et un palier à roulement côté générateur (4), dans lequel le palier à roulement côté moyeu (3) est réalisé sous la forme d'un palier à rouleaux radiaux à plusieurs rangées, et le palier à roulement côté générateur (4) est réalisé sous la forme d'un palier à rouleaux coniques à double rangée dans une disposition en X ou une disposition en O,
**caractérisé en ce que** le palier à roulement côté générateur (4) et le palier à roulement côté moyeu (3) présentent des voies de roulement durcies par induction, dans lequel les paliers à roulement (3, 4) sont respectivement emmanchés par leur bague intérieure côté extrémité sur l'arbre de rotor et sont vissés à l'aide de vis traversant la bague intérieure respective dans la direction axiale des paliers à roulement (3, 4) sur une saillie radiale associée de l'arbre de rotor.

2. Ensemble de paliers selon la revendication 1, dans lequel le palier à roulement côté générateur (4) présente une bague intérieure en une seule partie et une bague extérieure en plusieurs parties.

3. Ensemble de paliers selon l'une quelconque des revendications précédentes, dans lequel le palier à roulement côté moyeu (3) est réalisé sous la forme d'un palier à rouleaux cylindriques.

4. Ensemble de paliers selon l'une quelconque des revendications précédentes, dans lequel le palier à roulement côté moyeu (3) est réalisé sous la forme d'un palier à rouleaux à double rangée.

5. Ensemble de paliers selon l'une quelconque des revendications précédentes, dans lequel le palier à roulement côté moyeu (3) présente une cage fermée pour guider une pluralité d'éléments roulants.

6. Ensemble de paliers selon la revendication 5, dans lequel les éléments roulants (5) du palier à roulement côté moyeu (3) sont guidés dans des ouvertures de la cage.

7. Ensemble de paliers selon la revendication 5, dans lequel les éléments roulants (5) du palier à roulement côté moyeu (3) sont disposés sur plusieurs rangées, et les rangées dans la cage sont séparées par une barrette centrale.

8. Ensemble de paliers selon la revendication 5, dans lequel les éléments roulants (5) du palier à roulement côté moyeu (3) sont guidés dans une cage à axes.

9. Ensemble de paliers selon l'une quelconque des revendications précédentes, dans lequel le palier à roulement côté générateur (4) présente une cage fermée pour guider une pluralité d'éléments roulants.

10. Ensemble de paliers selon la revendication 9, dans lequel les éléments roulants (6) du palier à roulement côté générateur (4) sont guidés dans des ouvertures de la cage.

11. Ensemble de paliers selon la revendication 9, dans lequel les éléments roulants (6) du palier à roulement côté générateur (4) sont guidés dans une cage à axes.

12. Ensemble de paliers selon l'une quelconque des revendications précédentes, dans lequel le palier à roulement côté générateur (4) présente des joints de fente de palier.

13. Ensemble de paliers selon l'une quelconque des revendications précédentes, dans lequel le palier à roulement côté moyeu (3) est réalisé sous forme de palier libre, et le palier à roulement côté générateur (4) est réalisé sous forme de palier fixe.
